# EUROPÄISCHE PATENTSCHRIFT

(11) **EP 0 854 822 B1**
(45) Veröffentlichungstag und Bekanntmachung des Hinweises auf die Patenterteilung: **23.06.1999**
(21) Anmeldenummer: 96931756.9
(22) Anmeldetag: 19.09.1996
(51) Int. Cl.: B65B 51/30

(54) **QUERNAHTSIEGELEINRICHTUNG AN EINER SCHLAUCHBEUTELMASCHINE**
TRANSVERSE SEAM SEALER FOR A BAG FORMING AND FILLING MACHINE
DISPOSITIF DE SCELLAGE PAR JOINT TRANSVERSAL SUR MACHINE A FORMER ET A REMPLIR DES SACHETS

(30) Priorität: 11.10.1995 DE 19537833
(43) Veröffentlichungstag der Anmeldung: 29.07.1998
(73) Patentinhaber: ROBERT BOSCH GMBH, 70442 Stuttgart (DE)
(72) Erfinder: STIRNKORB, Willi, D-71334 Waiblingen (DE); BECK, Martin, D-73660 Urbach (DE)
(86) Internationale Anmeldenummer: DE9601773
(87) Internationale Veröffentlichungsnummer: WO9713688

(56) Entgegenhaltungen:
- WO-A-86/04559
- US-A- 3 050 916

## Beschreibung

### Stand der Technik

Die Erfindung betrifft eine Quernahtsiegeleinrichtung an einer Schlauchbeutelmaschine zum Herstellen von Schlauchbeutelpackungen nach der Gattung des Anspruchs 1 (siehe WO-A-86 04 559). In derartigen bekannten Schlauchbeutelmaschinen wird aus einer Packstoffbahn zunächst fortlaufend ein Schlauch geformt, dieser jeweils um eine Beutellänge vorgezogen, in seinen verschlossenen Endabschnitt jeweils eine Füllgutmenge eingebracht, und dieser Endabschnitt durch eine Quernaht abgeteilt, die an der gerade fertiggestellten Beutelpackung eine Kopfnaht und am neuen Schlauchendabschnitt eine Bodennaht bildet. Durch einen Schnitt zwischen der Kopfnaht und der Bodennaht wird die fertige Beutelpackung abgetrennt. Der Schlauch wird von zwei Klemmbackenpaaren, die oberhalb und unterhalb der Quernahtstelle angreifen, jeweils in einer oberen Stellung erfaßt, um eine Beutellänge vorgezogen und dann freigegeben. Danach kehrt die Quernahtsiegeleinrichtung zur Aufnahme eines neuen Arbeitstaktes in die obere Lage zurück. Die Siegelbacken der Quernahtsiegeleinrichtung sind in einem Zwischenraum zwischen den beiden Klemmbackenpaaren hin- und herbewegbar. Die Siegelfläche der Siegelbacken ist durch eine Nut unterbrochen, in der ein Trennmesser zum Abschneiden der fertigen Beutelpackung zwischen der Kopfnaht der Beutelpackung und der Bodennaht des Schlauchendabschnitts eingesetzt ist. Bei manchen Einrichtungen sitzt das Trennmesser fest in einem der Siegelbacken, durchschneidet den Schlauch bereits beim Schließen der Siegelbacken, und taucht in eine Nut in der anderen Siegelbacke ein. Bei einer anderen Ausführungsform ist das Trennmesser in einer Nut des Siegelbackens vor- und zurückziehbar und hat einen eigenen Antrieb. Es wird nach dem Siegelvorgang vorgestoßen, so daß es die Trennung der Quernaht durchführt.

Beide Ausführungsformen der bekannten Quernahtsiegeleinrichtungen haben den Nachteil, daß das Trennmesser durch seine Einbettung in einen Siegelbacken annähernd auf die Siegeltemperatur erhitzt wird. Zudem verbleibt am Schlauch wegen der Aufteilung der Siegelfläche durch die Nut zum Aufnehmen des Trennmessers zwischen der Kopfnaht der Schlauchbeutelpackung und der Bodennaht des Schlauchendabschnitts ein nicht gesiegelter schmaler Streifen, in dem sich Produktteilchen befinden. Beim Durchdrängen dieses Streifens kommen immer wieder Produktteilchen mit dem erhitzten Trennmesser in Berührung, auf dessen heißer Oberfläche sie sich festsetzen und verbrennen. Die Verbrennungsrückstände führen dann zu Störungen beim Abtrennen der Schlauchbeutelpackungen vom Schlauch.

### Vorteile der Erfindung

Die erfindungsgemäße Quernahtsiegeleinrichtung mit den kennzeichnenden Merkmalen des Anspruchs 1 hat demgegenüber den Vorteil, daß zum einen Produktteilchen im Quernahtbereich des Schlauches festgebunden sind, und daß zum andern das Trennmittel eine Temperatur hat, bei der ein Anbrennen von Produktteilchen am Trennmesser nicht möglich ist. Dadurch ergibt sich beim Betrieb der Einrichtung der erhebliche Vorteil, daß sehr hohe Standzeiten der Trenneinrichtung erzielt werden.

### Zeichnung

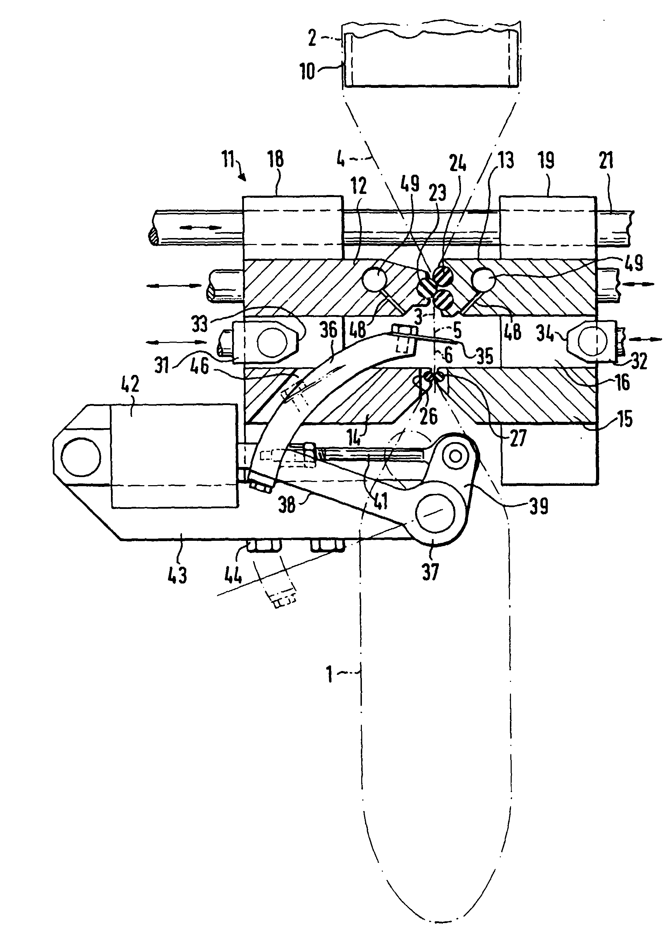

Ein Ausführungsbeispiel der Erfindung ist in der Zeichnung dargestellt und wird in der nachfolgenden Beschreibung näher erläutert. Die einzige Figur zeigt eine Quernahtsiegeleinrichtung an einer Schlauchbeutelmaschine im Querschnitt.

### Beschreibung des Ausführungsbeispiels

Unterhalb des Formrohrs 10 einer Vorrichtung zum Formen, Füllen und Verschließen von Beutelpackungen 1 ist eine Quernahtsiegeleinrichtung 11 angeordnet. Diese Quernahtsiegeleinrichtung 11 ist vorzugsweise zum Vorziehen des um das Formrohr 10 aus einer Packstoffbahn gebildeten Schlauches 2 heb- und senkbar. Wie an sich bekannt und daher nicht näher dargestellt, ist die Quernahtsiegeleinrichtung 11 an einem Träger angeordnet, der um jeweils eine Beutellänge auf- und abbewegt wird. Alternativ dazu kann die Quernahtsiegeleinrichtung auch stationär sein, wenn der Schlauch, wie ebenfalls an sich bekannt, von einer Schlauchvorschubeinrichtung transportiert wird.

Die Quernahtsiegeleinrichtung 11 hat zwei Klemmbackenpaare 12, 13 und 14, 15, die durch einen Zwischenraum 16 übereinander beabstandet sind. Die Klemmbacken 12, 14 bzw. 13, 15 sind auf jeder Seite des Schlauches 2 in ihren Enden an Wangen 18, 19 befestigt, welche auf waagrechten Führungsstangen 21 von einem nicht dargestellten, an sich bekannten Linearantrieb gegeneinander zum Festklemmen des Schlauches 2 verschiebbar sind. In den einander zugewandten Seitenwänden der Klemmbacken 12, 13; 14, 15 sind, um die Reibung zu erhöhen, elastische Klemmstücke, beispielsweise Stränge 23, 24, 25 und 26, 27 vorzugsweise aus Gummi eingesetzt, die beim Zusammenpressen der Klemmbackenpaare 12, 13; 14, 15 den zwischenliegenden Schlauch 2 flachdrücken und festhalten, wobei zwischen dem oberen Klemmbackenpaar 12, 13 und dem unteren Klemmbackenpaar 14, 15 der zwischenliegende Schlauchabschnitt 3 flachgespannt ist.

In den Zwischenraum 16 zwischen den beiden Klemmbackenpaaren 12, 13; 14, 15 taucht von jeder Seite her je ein Siegelbacken 31, 32 ein, die von einem Linearantrieb parallel zu den Klemmbacken gegeneinander und gegen den dort gespannten Schlauchabschnitt 3 bewegbar und zum Herstellen einer Quernaht pressbar sind.

Ebenfalls in den Zwischenraum 16 ist ein Trennmesser 35 einführbar, das bei seinem Vorstoß den gespannten Schlauchabschnitt 3 nach dem Herstellen einer Quernaht durch die Siegelbacken 31, 32 quer zur Schlauchrichtung durchtrennt, wobei die Quernaht der Länge nach in eine Bodennaht 5 am Schlauchendabschnitt 4 und in eine Kopfnaht 6 an der fertigen Beutelpackung 1 zerteilt wird. Das Trennmesser 35 ist an einem bogenförmigen Arm 36 befestigt, der seinerseits an dem einen Arm 38 eines an einem Träger 43 schwenkbaren Winkelhebels 37 befestigt ist, dessen anderer Arm 39 an der Kolbenstange 41 eines ebenfalls schwenkbar am Träger 43 aufgehängten Pneumatikzylinders 42 angelenkt ist. Der Träger 43 ist an der Unterseite einer der Wangen 18 mittels Schrauben 44 befestigt. Die Antriebseinrichtung 36 - 43 für das Trennmesser 35 ist am unteren Ende der die linken Klemmbacken 12, 14 tragenden Wange 18 angeordnet. Der dortige untere Klemmbacken 14 hat einen Durchbruch 46, in den das Trennmesser 35 in seine Ruhestellung zurückgezogen wird und den der Arm 36 des in Arbeitsstellung verbrachten Trennmessers 35 durchsetzt. Einerseits kann in der Ruhestellung des Trennmessers 35 der benachbarte Siegelbacken 31 unbehindert in den Zwischenraum 16 gegen den gespannten Schlauchabschnitt 3 bewegt werden, und andererseits kann das Trennmesser 35 in Betrieb genommen werden, wenn sich der Siegelbacken 31 in seiner Ausgangsstellung befindet.

Die Quernahtsiegeleinrichtung 11 arbeitet wie folgt: Beim Hochfahren der Quernahtsiegeleinrichtung 11 in die obere, dem Formrohr 10 nahe Lage sind die Klemmbacken 12, 13; 14, 15 sowie die Siegelbacken 31, 32 auseinandergefahren und das Trennmesser 35 befindet sich in Ruhestellung in dem Durchbruch 46 des Klemmbackens 14. In der oberen Lage werden dann zunächst die Klemmbacken 12, 13; 14, 15 von beiden Seiten her gegen den Schlauchendabschnitt 4 gegeneinander bewegt, wobei sie den Schlauchendabschnitt 4 zusammendrücken, so daß zwischen den beiden Klemmbackenpaaren 12, 13 und 14, 15 der Schlauchabschnitt 3 gebildet wird, der die fertigzustellende Beutelpackung 1 vom Schlauchendabschnitt 4 abteilt. Mit einer geringen Verzögerung werden dann auch die beiden Siegelbacken 31, 32 gegeneinander gefahren, so daß sie mit ihrer ebenen Siegelfläche 33, 34 den Schlauchabschnitt 3 auf einer bestimmten Breite verpressen und durch Übertragen von Wärme eine Quernaht bilden.

Nach einer bestimmten Siegelzeit fahren die Siegelbacken 31, 32 in ihre Ausgangsstellung zurück. Sobald der Zwischenraum 16 frei ist, wird das Trennmesser 35 aus dem Durchbruch 46 gegen die Mitte der am Schlauchabschnitt 3 angebrachten Quernaht vorgestoßen und wieder zurückgezogen, so daß diese der Länge nach durchtrennt wird, wobei die Kopfnaht 6 an der fertiggestellten Beutelpackung 1 und die Bodennaht 5 am neuen Schlauchendabschnitt 4 gebildet werden. Während des Siegelns und Trennens der Boden- und Kopfnaht 5, 6, währenddessen der Schlauchendabschnitt 4 und die neue Beutelpackung 1 von den Klemmbacken 12, 13; 14, 15 gehalten werden, fährt die Quernahtsiegeleinrichtung 11 um eine Beutellänge nach unten, wobei der Schlauch 1 auf dem Formrohr 10 vorgezogen wird. In der unteren Lage öffnen dann die Klemmbacken 12, 13; 14, 15, geben die gefertigte Beutelpackung 1 und den Schlauchendabschnitt 4 frei und fahren in die obere Stellung zurück.

Ergänzend wird bemerkt, daß das Trennmesser 35 zum Erzielen eines sauberen, leicht durchführbaren Schnittes an der Quernaht oder zum Erzielen eines ziehenden Schnittes eine schräge, eine sägenzahnförmige oder auch anders geartete Schnittkante aufweisen kann. Außerdem wird zum schnellen Abkühlen der Quernaht nach dem Abheben der Siegelbacken 31, 32 von dieser aus Düsen 48 in den oberen Klemmbacken 12, 13 kurzzeitig Kühlluft geblasen. Die Kühlluft wird den Düsen 48 durch Längsbohrungen 49 in den Klemmbacken 12, 13 getaktet zugeführt. Schließlich wird noch darauf hingewiesen, daß die Bewegungsbahn des Trennmessers 35 nicht nur bogenförmig sondern auch linear gestaltet werden kann.

## Patentansprüche

1. Quernahtsiegeleinrichtung (11) an einer Schlauchbeutelmaschine, mit zwei einen Zwischenraum (16) begrenzenden Paaren von gegeneinander beweg- und preßbaren Klemmbacken (12, 13; 14, 15), mit einem Paar von in den Zwischenraum (16) eintauchenden, aus einer Ausgangsstellung in eine Siegelstellung bewegbaren Siegelbacken (31, 32), die in der Siegelstellung einen Schlauch (2) quer zusammenpressen und dabei eine Kopfnaht (6) an einer fertigzustellenden Beutelpackung (1) und eine Bodennaht (5) am Schlauchendabschnitt (4) durch Übertragen von Druck und Wärme fertigen, und mit einem die Beutelpackung (1) vom Schlauchendabschnitt (4) nach dem Anbringen der Boden- und der Kopfnaht (5, 6) zwischen diesen abtrennenden Trennmittel (35), das von einem vom Antrieb der Siegelbacken (31, 32) gesonderten Antrieb (36 bis 42) betätigt wird, dadurch gekennzeichnet, daß die Siegelflächen (33, 34) der Siegelbacken (31, 32) zur Herstellung der Kopfnaht (6) der fertigen Beutelpackung (1) und der Bodennaht (5) des Schlauchendabschnitts (4) durchgehend eben sind, und daß das Trennmittel (35) aus der Arbeitsstellung, in der es die Schlauchbeutelpackung (1) vom Schlauchendabschnitt (4) zwischen den Klemmbackenpaaren (12, 13; 14, 15) durchtrennt, in eine Ruhestellung bewegbar ist, die außerhalb des Bewegungsraumes der Siegelbacken (31, 32) liegt.

2. Quernahtsiegeleinrichtung nach Anspruch 1 dadurch gekennzeichnet, daß in einem der Klemmbacken (14) ein Hohlraum (46) zur Aufnahme des Trennmittels (35) in dessen Ruhestellung angeordnet ist.

3. Quernahtsiegeleinrichtung nach Anspruch 2, dadurch gekennzeichnet, daß der Hohlraum durch einen Durchbruch (46) im Klemmbacken (14) gebildet ist, durch den ein das Trennmittel (35) tragender Arm (36) bewegbar ist.

4. Quernahtsiegeleinrichtung nach einem der Ansprüche 1 bis 3, dadurch gekennzeichnet, daß das Trennmittel als flaches Trennmesser (35) ausgebildet und auf einem schwenkbaren Arm (36) befestigt ist.

5. Quernahtsiegeleinrichtung nach Anspruch 4, dadurch gekennzeichnet, daß der Arm (36) an einem Winkelhebel (37) angeordnet ist, der von einem Linearmotor (42) verschwenkt wird.

## Claims

1. Transverse-seam-sealing device (11) on a tubular bag machine, having two pairs, delimiting an interspace (16), of clamping jaws (12, 13; 14, 15) which can be moved towards one another and pressed together, having a pair of sealing jaws (31, 32) which penetrate into the interspace (16), can be moved from an initial position into a sealing position, and, in the sealing position, compress a flexible tube (2) transversely and in doing so form, by transmitting pressure and heat, a top seam (6) on a bag pack (1) which is to be produced and a bottom seam (5) on the flexible-tube end section (4), and having a severing means (35) which severs the bag pack (1) from the tube end section (4), after the bottom seam and the top seam (5, 6) have been provided between these, and is actuated by a drive (36 to 42) which is separate from the drive of the sealing jaws (31, 32), characterized in that the sealing surfaces (33, 34) of the sealing jaws (31, 32) for producing the top seam (6) of the finished bag pack (1) and the bottom seam (5) of the flexible-tube end section (4) are planar throughout, and in that the severing means (35) can be moved from the operating position, in which it severs the tubular bag pack (1) from the flexible-tube end section (4) between the pairs of clamping jaws (12, 13; 14, 15), into a rest position, which is located outside the movement space of the sealing jaws (31, 32).

2. Transverse-seam-sealing device according to Claim 1, characterized in that a cavity (46) for receiving the severing means (35) in the rest position of the latter is arranged in one of the clamping jaws (14).

3. Transverse-seam-sealing device according to Claim 2, characterized in that the cavity is formed by a through-passage (46) in the clamping jaw (14), it being possible for an arm (36) which bears the severing means (35) to be moved through said through-passage.

4. Transverse-seam-sealing device according to one of Claims 1 to 3, characterized in that the severing means is designed as a flat cutter (35) and is fastened on a pivotable arm (36).

5. Transverse-seam-sealing device according to Claim 4, characterized in that the arm (36) is arranged on an angle lever (37) which is pivoted by a linear motor (42).

## Revendications

1. Dispositif de scellage par joint transversal (11) sur une machine à former et à remplir des sachets, qui comprend deux paires de mâchoires de serrage (12, 13; 14, 15), délimitant un espace intermédiaire (16), une paire de mâchoires de scellage (31, 32) plongeant dans l'espace intermédiaire (16) et pouvant passer d'une position de départ à une position de scellage, mâchoires de scellage (31, 32) qui compriment transversalement un tuyau (2) en position de scellage, et ce faisant réalisent un joint de tête (6) sur un sachet d'emballage (1) à terminer, et un joint de base (5) sur la section terminale (4) du tuyau, en transmettant de la pression et de la chaleur, et un moyen de séparation (35) qui sépare le sachet d'emballage (1) de la section terminale de tuyau (4) après la mise en place du joint de base et du joint de tête (5, 6) entre ce moyen de séparation (35) à écarter, moyen qui est actionné par un mécanisme d'entraînement (36 à 42) distinct du mécanisme d'entraînement des mâchoires de scellage (31, 32),
caractérisé en ce que
• les surfaces de scellage (33, 34) des mâchoires de scellage (31, 32), qui servent à fabriquer le joint de tête (6) du sachet d'emballage terminé (1) et le joint de base (5) de la section terminale de tuyau (4), sont plates de bout en bout, et
• le moyen de séparation (35) peut être amené dans une position de repos à partir de la position de travail, dans laquelle il sépare le sachet d'emballage (1) de la section terminale de tuyau (4) entre les paires de mâchoires de serrage (12, 13; 14, 15), position de repos qui se trouve en dehors de l'espace dans lequel se meuvent les mâchoires de scellage (31, 32).

2. Dispositif de scellage par joint transversal, selon la revendication 1,
caractérisé en ce que
l'on dispose dans l'une des mâchoires de serrage (14) une cavité (46) qui sert à recevoir le moyen de séparation (35) quand il est dans sa position de repos.

3. Dispositif de scellage par joint transversal, selon la revendication 2,
caractérisé en ce que
la cavité est formée par un ajour (46) dans la mâchoire de serrage (14), ajour à travers lequel peut se déplacer un bras (36) qui supporte le moyen de séparation (35).

4. Dispositif de scellage par joint transversal, selon l'une des revendications 1 à 3,
caractérisé en ce que
le moyen de séparation est constitué sous la forme d'un couteau de séparation plat (35) et est fixé sur un bras (36) qui peut pivoter.

5. Dispositif de scellage par joint transversal, selon la revendication 4,
caractérisé en ce que
le bras (36) est disposé sur un levier coudé (37) que l'on peut faire pivoter au moyen d'un moteur linéaire (42).
